# EUROPÄISCHE PATENTSCHRIFT

(11) **EP 0 641 991 B1**
(45) Veröffentlichungstag und Bekanntmachung des Hinweises auf die Patenterteilung: **12.01.2000**
(21) Anmeldenummer: 94810499.7
(22) Anmeldetag: 01.09.1994
(51) Int. Cl.: G01B 3/02, G01B 3/06

(54) **Gliedermassstab**
Foldable rule
Mètre pliant

(30) Priorität: 03.09.1993 CH 262593; 19.04.1994 CH 118994
(43) Veröffentlichungstag der Anmeldung: 08.03.1995
(73) Patentinhaber: Kunststoffwerk AG Buchs, 9470 Buchs (CH)
(72) Erfinder: Walser,Werner, CH-9472Grabs (CH)
(74) Vertreter: Kulhavy, Sava, Dipl.-Ing.

(56) Entgegenhaltungen:
- DE-A- 2 907 009
- DE-C- 51 817
- DE-U- 8 905 468
- GB-A- 1 357 513

## Beschreibung

Die vorliegende Erfindung betrifft einen Gliedermassstab mit zumindest einem Schutzstuck, welches an zumindest einem der Endglieder des Gliedermassstabes angebracht ist, welches im wesentlichen T-förmig ist und dessen Stiel im Endglied des Gliedermassstabes eingelassen bzw. eingesetzt ist.

Ein Gliedermassstab dieser Gattung ist in DE-PS 51 817 beschrieben. Die Glieder dieses Massstabes sind aus Holz und in der freien Endpartie des jeweiligen Endgliedes ist ein im wesentlichen T-förmiges Schutzstück eingesetzt. In der freien Endpartie des Endgliedes ist ein durchgehender Schlitz ausgeführt, dessen Mündungen in den Schmalseiten des Endgliedes liegen. Die diesen Schlitz begrenzenden Wände, welche durch Reste des geschlitzten Endgliedes aus Holz gebildet sind, sind sehr dünn und ihre Formfestigkeit ist daher gering. Das Endstück ist aus Metall. Der Stiel des Endstückes ist flach, er ist praktisch gleich breit wie das Endglied und er ist im Schlitz, welcher von einer Schmalseite bis zur anderen Schmalseite des Endgliedes reicht, eingesetzt. Da die Seitenwände des Schlitzes im Endglied sehr schwach sind, muss das Endstück mit Hilfe von Nieten im Schlitz befestigt sein.

Obwohl diese vorbekannte Massnahme am Gliedermassstab aus Holz Probleme bei der Anwendung dieses Massstabes lösen konnte, hat sich diese vorbekannte Massnahme in der Praxis nicht durchgesetzt. Es ist anzunehmen, dass die Probleme bei der Herste lung solcher Gliedermassstäbe so gross waren, dass es solche Gliedermassstäbe auf dem Markt nicht gibt. Die Probleme, welche bei der Anwendung der Gliedermassstäbe aus Holz bestanden, existieren in ähnlicher Form auch bei Gliedermasstäben aus Kunststoff. Die Endstücke, welche beim vorbekannten Gliedermassstab aus Holz verwendet wurden, sind bei den Gliedermassstäben aus Kunststoff jedoch nicht verwendbar.

In DE-GM 89 05 468.7 ist eine lineare Messvorrichtung offenbart, welche koaxial ineinander eingeschobene Rohre als Massstabglieder aufweist. Eine der Stirnflächen des den kleinsten Durchmesser aufweisenden Vorrichtungsrohres ist mit einer kreisrunden Scheibe versehen, welche auf der Stirnfläche flach aufliegt. Der Durchmesser dieser Scheibe ist so gross, dass die Umfangsfläche dieser Scheibe mit der Aussenfläche des den grössten Durchmesser aufweisenden Vorrichtungsrohres bündig ist. Folglich überdeckt diese Scheibe die Stirnflächen auch der übrigen und zwischen den zwei genannten Rohren liegenden Rohre. In der Mündung des Rohres mit dem kleinsten Durchmesser ist ein zylinderförmiger Kunststoffteil eingesetzt und die Scheibe ist auf diesem Kunststoffteil genietet oder geschraubt.

GB-PS 1 357 513 offenbart eine Messvorrichtung, welche einen stabförmigen und steifen Grundkörper aufweist. Zumindest in einer der Endpartien dieses Stabes ist ein Endstück herausnehmbar eingesetzt, welches als Anschlag und als Schutz gegen Eindringen von Schmutz in das Innere der Endpartie des Stabes dient. Wenn dieses Endstück aus dem Grundkörper herausgezogen wird, dann kann ein Hilfsgerät in die dadurch frei gewordene Oeffnung im Grundkörper eingesetzt werden.

Das Längenmessinstrument gemäss DE-A 29 07 009 weist einen länglichen, steifen und hohlen Grundkörper auf, welcher einerends offen ist. Im Inneren dieses Grundkörpers können Zeichenutensilien untergebracht sein. Damit diese aus dem Grundkörper nicht herausfallen, ist eine Kappe vorgesehen, welche in das offene Ende des Instrumentengrundkörpers eingesetzt ist.

Die Aufgabe der vorliegenden Erfindung ist, einen Gliedermassstab anzugeben, welcher die genannten Nachteile sowie noch weitere Nachteile nicht aufweist.

Diese Aufgabe wird beim Gliedermassstab der eingangs genannten Gattung erfindungsgemäss so gelöst, wie dies im kennzeichnenden Teil des Anspruchs 1 definiert ist.

Nachstehend werden Ausführungsmöglichkeiten der vorliegenden Erfindung anhand der beiliegenden Zeichnungen näher erläutert.
Es zeigt:
Fig. 1 in einer Draufsicht und teilweise im Schnitt eine erste Ausführung der freien Endpartie eines der Endglieder eines Gliedermassstabes, wobei ein praktisch T-förmiges Schutzstück in der Endpartie eingesetzt ist,
Fig. 2 in einer Draufsicht das Schutzstück gemäss Fig. 1,
Fig. 3 in einer Seitenansicht und teilweise im Schnitt das Endglied nach Fig. 1,
Fig. 4 in einer Seitenansicht das Schutzstück nach Fig. 2,
Fig. 5 einen vergrösserten Ausschnitt aus Fig. 3,
Fig. 6 in einer Draufsicht und teilweise im Schnitt eine zweite Ausführung der freien Endpartie eines der Endglieder eines Gliedermassstabes, wobei ein praktisch T-förmiges Schutzstück in der Endpartie eingesetzt ist,
Fig. 7 in einer Draufsicht das Schutzstück gemäss Fig. 6,
Fig. 8 in einer Seitenansicht und teilweise im Schnitt das Endglied nach Fig. 6,
Fig. 9 in einer Seitenansicht das Schutzstück nach Fig. 7,
Fig. 10 einen vergrösserten Ausschnitt aus Fig. 8,
Fig. 11 in einer Seitenansicht und teilweise im Schnitt eine dritte Ausführung der freien Endpartie eines der Endglieder eines Gliedermassstabes, wobei ein praktisch T-förmiges Schutzstück in der Endpartie eingesetzt ist,
Fig. 12 in einer Draufsicht und teilweise im Schnitt eine vierte Ausführung der freien Endpartie eines der Endglieder eines Gliedermassstabes, wobei ein praktisch T-förmiges Schutzstück in der Endpartie eingesetzt ist,
Fig. 13 in einer Draufsicht das Schutzstück gemäss Fig. 12,
Fig. 14 in einer Seitenansicht und teilweise im Schnitt das Endglied nach Fig. 12,
Fig. 15 in einer Seitenansicht das Schutzstück nach Fig. 13,
Fig. 16 in einer Draufsicht und teilweise im Schnitt eine fünfte Ausführung der freien Endpartie eines der Endglieder eines Gliedermassstabes,
Fig. 17 in einer Draufsicht ein Schutzstück, welches in die Endpartie des Endgliedes gemäss Fig. 16 einsetzbar ist,
Fig. 18 in einer Seitenansicht und teilweise im Schnitt das Endglied nach Fig. 16,
Fig. 19 in einer Seitenansicht das Schutzstück nach Fig. 17,
Fig. 20 vergrössert einen Ausschnitt aus Fig. 17,
Fig. 21 in einer Draufsicht eine weitere Ausführung des Endgliedes,
Fig. 22 in einer Seitenansicht und teilweise im Schnitt das Endglied nach Fig. 21,
Fig. 23 in einer Frontansicht eine weitere Ausführung des Endgliedes,
Fig. 24 in einer Seitenansicht und teilweise im Schnitt das Endglied nach Fig. 23.
Fig. 25 in einer Draufsicht eines der Endglieder eines Gliedermassstabes,
Fig. 26 in einer Draufsicht und teilweise im Schnitt eine Ausführung der Endpartie des Endgliedes aus Fig. 25, wobei ein praktisch T-förmiges Schutzstück in der freien Endpartie des Endgliedes eingesetzt ist,
Fig. 27 in einer Seitenansicht und teilweise im Schnitt die freie Endpartie des Endgliedes aus Fig. 26,
Fig. 28 in einer Draufsicht und teilweise im Schnitt eine weitere Ausführung der Endpartie des Endgliedes aus Fig. 25, wobei ein praktisch T-förmiges Schutzstück in der freien Endpartie des Endgliedes eingesetzt ist,
Fig. 29 in einer Seitenansicht und teilweise im Schnitt die freie Endpartie des Endgliedes nach Fig. 28,
Fig. 30 in einer Draufsicht eine weitere Ausführung der Endpartie des Endgliedes aus Fig. 25, wobei ein praktisch T-förmiges Schutzstück in der freien Endpartie des Endgliedes eingesetzt ist,
Fig. 31 in einer Seitenansicht und teilweise im Schnitt die freie Endpartie des Endgliedes nach Fig. 30,
Fig. 32 in einer Draufsicht eine weitere Ausführung der Endpartie des Endgliedes aus Fig. 25, wobei ein praktisch T-förmiges Schutzstück in der freien Endpartie des Endgliedes eingesetzt ist,
Fig. 33 in einer Draufsicht und teilweise im Schnitt eine weitere Ausführung der Endpartie des Endgliedes aus Fig. 25, wobei ein praktisch T-förmiges Schutzstück in der freien Endpartie des Endgliedes eingesetzt ist,
Fig. 34 in einer Seitenansicht und teilweise im Schnitt die freie Endpartie des Endgliedes nach Fig. 33,
Fig. 35 in Längsschnitt das T-förmige Schutzstück aus Fig. 33,
Fig. 36 in Querschnitt das T-förmige Schutzstück aus Fig. 33,
Fig. 37 in einer Draufsicht und teilweise im Schnitt eine weitere Ausführung der Endpartie des Endgliedes aus Fig. 25, wobei ein praktisch T-förmiges Schutzstück in der freien Endpartie des Endgliedes eingesetzt ist,
Fig. 38 in einer Seitenansicht und teilweise im Schnitt die freie Endpartie des Endgliedes nach Fig. 37,
Fig. 39 in Frontansicht eine weitere Ausführung des T-förmigen Schutzstückes aus Fig. 37 und
Fig. 40 in Längsschnitt das T-förmige Schutzstück aus Fig. 39.

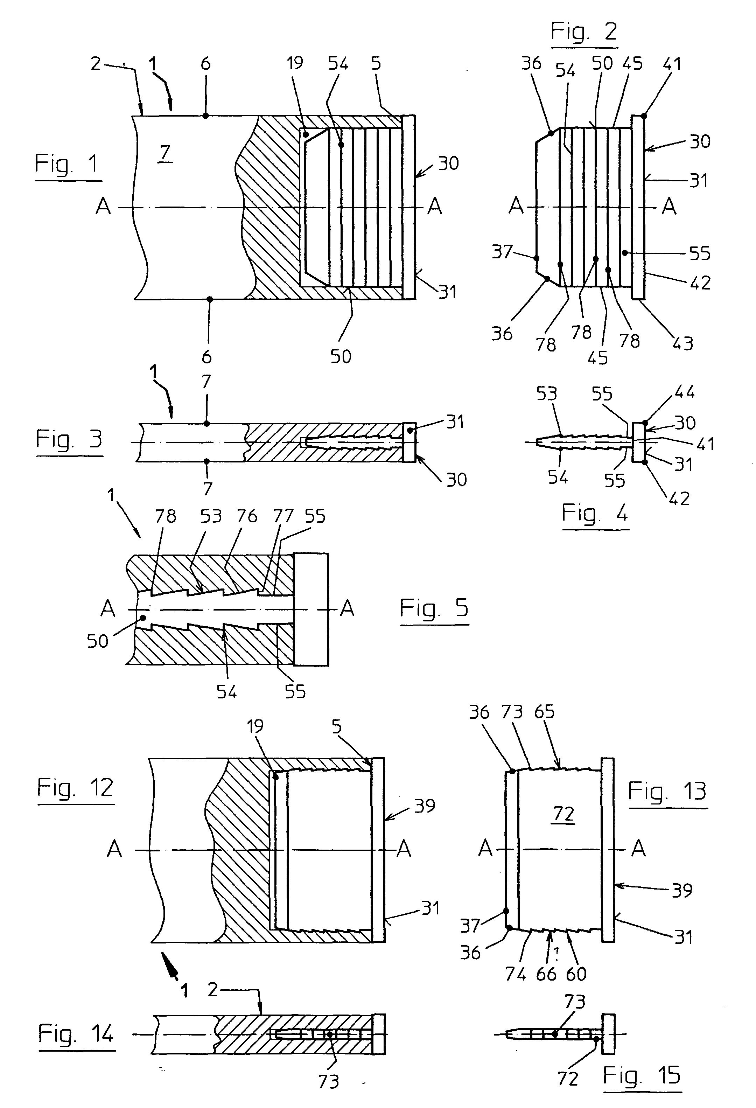

Fig. 1 zeigt in einer Draufsicht und teilweise im Schnitt eine erste Ausführung der freien Endpartie eines der Endglieder 1 eines Gliedermassstabes. Ein praktisch T-förmiges Schutzstück 30 ist in der Endpartie des Endgliedes 1 eingesetzt. Fig. 2 zeigt in einer Draufsicht das Schutzstück gemäss Fig. 1. In Fig. 3 ist das Endglied nach Fig. 1 in einer Seitenansicht und teilweise im Schnitt abgebildet. Fig. 4 zeigt in einer Seitenansicht das Schutzstück nach Fig. 2. In Fig. 5 befindet sich ein vergrösserter Ausschnitt aus Fig. 3.

Die Glieder des vorliegenden Massstabes sind vorteilhaft aus einem Kunststoff und sie weisen einen bei solchen Massstäben üblichen rechteckförmigen Querschnitt auf. Der Grundkörper 2 des abgebildeten Endgliedes 1 eines solchen Massstabes ist somit länglich und flach ausgebildet und er weist schmale Seitenflächen 6 sowie breite Seitenflächen 7 auf.

Die in Fig. 1 und 3 abgebildete Endpartie eines der Endglieder 1 des Gliedermassstabes ist mit einer Ausnehmung bzw. Ausnahme 19 versehen. Diese Ausnehmung 19 ist in der freien Endpartie des Anfangs- oder/und Endgliedes 1 des Massstabes ausgebildet und sie erstreckt sich von der Stirnfläche 5 dieser Endpartie in das Innere des Endgliedes 1 hinein. Der Querschnitt dieser Ausnehmung 19 ist im wesentlichen rechteckförmig und dieser Querschnitt ist zur Längsachse A des Endgliedes 1 symmetrisch angeordnet. Die Wände dieser Ausnehmung 19 sind glatt.

Das Schutzstück 30 ist im wesentlichen T-förmig und es weist einen Balken 31 sowie einen von diesem Balken 31 abstehenden Stiel 50 auf. Der Balken 31 hat die Form eines Quaders. Die Länge dieses quaderförmigen Balkens 31 entspricht der Breite des Endgliedes 1. Dies bedeutet, dass die Länge des Balkens 31 der Breite des Grundkörpers 2 des Endgliedes 1 gleicht oder kleiner als diese ist. Die Breite des Balkens 31 gleicht praktisch der Dicke des Grundkörpers 2 des Endgliedes 1. Die vom Endglied-Grundkörper 2 abgewandten Kanten 41, 42, 43 und 44 des Schutzstückbalkens 31 können abgerundet sein. Die Höhe bzw. die sich in der Richtung der Achse A des Schutzstückes erstreckende Abmessung des Schutzstückbalkens 31 kann ein ganzzahliges Vielfaches einer Masseinheit sein. Dieser Balken 31 kann somit beispielsweise 1, 2 oder mehr Millimeter hoch sein. Dementsprechend ist der Grundkörper 2 dieses Endgliedes 1 gekürzt.

Das Schutzstück 30 ist vorteilhaft aus Metall, wie zum Beispiel aus Stahl, Aluminium, Sintermetall oder auch aus Kunststoff ausgeführt. Wenn das Schutzstück aus Stahl ist, dann kann es als ganzes gehärtet sein, oder es kann wenigstens die Oberfläche des Schutzstückbalkens 31 gehärtet sein. Der Balken 31 kann sich vom Endglied 1 farblich unterscheiden.

Der Stiel 50 des Schutzstückes 30 ist flach bzw. plattenförmig ausgeführt und er ist einstückig mit dem Balken 31. Der Stiel 50 weist im wesentlichen einen rechteckförmigen Querschnitt auf, wobei die schmalen Seitenflächen 45 des Stieles 50 zu den schmalen Seiten 6 des Endglied-Grundkörpers 2 zugewandt sind und praktisch parallel zu diesen liegen. Die vom Balken 31 abgewandte freie Endpartie 37 des Stieles 50 ist zumindest im Bereich der Schmalseiten 45 des Stieles 50 mit Fasen 36 versehen, welche jedoch vorteilhaft an allen Rändern der Endpartie 37 ausgeführt sind.

Die grösseren Flächen bzw. Breitflächen 55 des Stieles 50 verlaufen parallel zueinander, parallel zu den Breitflächen 7 des Endstückes 2 sowie parallel zur Längsachse A des Endstückes 1. Die jeweilige Haupt- bzw. Breitfläche 55 des Stieles 50 ist mit einer Gruppe von Haken bzw. Rippen 53 und 54 versehen, welche so ausgeführt sind, dass sie mit der breiteren Wand der Ausnehmung 19 im Endglied 1 in Eingriff stehen können. Es versteht sich, dass die Befestigungshaken 53 oder 54 nur an einer der Hauptflächen 55 des Stieles 50 ausgeführt sein können. Die Zähne bzw. Rippen bzw. Haken 53 und 54 bewirken, dass der Stiel 50 in der Ausnehmung 19 kraftschlüssig befestigt ist. Der zum Balken 31 nächstliegende Zahn 53 bzw. 54 befindet sich in einem Abstand vom Balken 31. Dieser Abstand entspricht etwa der Grösse eines Zahnes. Diese Lücke zwischen dem Balken 31 und dem zu diesem am nächsten liegenden Zahn 53 bzw. 54 verhindert, dass die äussere Kante der Ausnehmung 19 beim Einsetzen des Schutzstückes 30 in das Endglied 1 beschädigt wird.

Der jeweilige Befestigungshaken bzw. -rippe 53 bzw. 54 ist als ein Widerhaken ausgeführt. Der Querschnitt des Widerhakens 53 bzw. 54 hat im dargestellten Fall (Fig. 5) die Form eines Sägezahnes. Der Sägezahn weist eine gegenüber der Stielhauptfläche 55 schräg verlaufende Flanke bzw. Fläche 76 sowie eine zur Hauptfläche 55 praktisch senkrecht stehende Flanke bzw. Fläche 77 auf. An der Stelle, wo sich diese Zahnflächen 76 und 77 treffen, ist ein Zahnkopf 78 vorhanden. Dieser Zahnkopf 78 hat die Form einer Kante, welche mit der Innenwand der Endglied-Ausnehmung 19 in Eingriff stehen kann. Der Kopf bzw. die Kante 78 des Zahnes 53 bzw. 54 erstreckt sich senkrecht zur Längsachse des Stieles 50 bzw. des Endgliedes 1. Dabei kann sich diese Kante 78 nur über einen Abschnitt der Breite der Hauptfläche 55 des Stieles 50 erstrecken. Im dargestellten Fall erstreckt sich der Zahn bzw. erstrecken sich die Zähne der genannten Gruppen 53 bzw. 54 über die gesamte Breite der Stielhauptfläche 55.

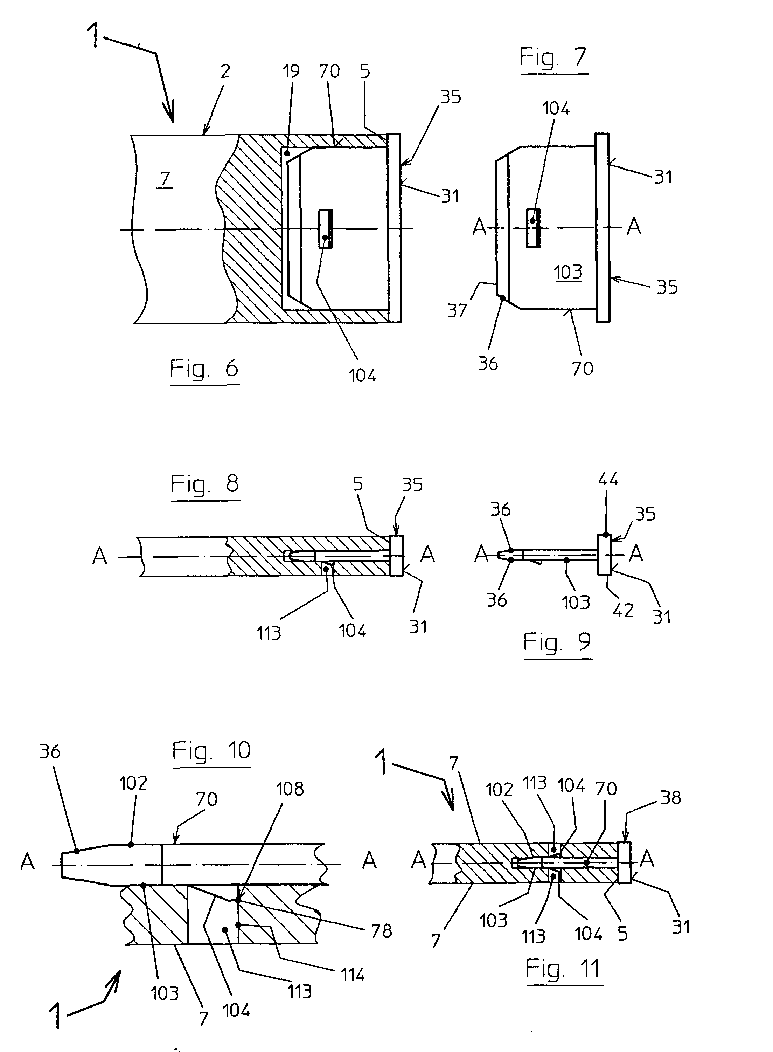

In Fig. 6 bis 10 ist eine weitere Ausführungsform des vorliegenden Endgliedes 1 mit einem Schutzstück 35 dargestellt, welches Breitseiten 102 und 103 aufweist. Bei diesem Schutzstück 35 trägt eine der Breitseiten bzw. Hauptflächen 103 (Fig. 9) des Stieles 70 einen Befestigungshaken 104, welcher sich über nur einen Abschnitt dieser Breitseite 103 erstreckt. Der Haken 104 befindet sich im mittleren Bereich der Breitseite 103, wobei seine Länge, gemessen senkrecht zur Längsachse A, etwa ein Viertel der Breite der Stielbreitfläche 103 ausmacht. Der Haken 104 kann vorteilhaft auch die Form eines Sägezahnes aufweisen, welcher vorstehend beschrieben ist. Der Zahn 104 befindet sich in einem Abstand sowohl vom Balken 31 als auch von der freien und mit den Fasen 36 versehenen Endpartie 37 des Stieles 70. Der Abstand des Zahnes 104 von der Endpartie 37 des Stieles 70 ist kleiner als der Abstand zwischen dem Zahn 104 und dem Balken 31. Es ist jedoch auch möglich, dass die genannten zwei Abstände gleich gross sind.

Zum Zusammenwirken mit dem genannten Zahn 104 ist eine Vertiefung 113 in einer der Innenwände (Fig. 8, 10 und 11) der Ausnehmung 19 im Grundkörper 2 des Endgliedes 1 ausgeführt. Die Seitenwände 114 (Fig. 10) dieser Vertiefung 113 stehen vorteilhaft senkrecht zu den Innenwänden der Ausnehmung 19 im Endglied 1. Die Vertiefung 113 kann als ein Sackloch ausgeführt sein, dessen Tiefe zumindest so gross ist, wie die Höhe des Zahnes 104. Diese Vertiefung 113 ist im dargestellten Fall als eine durchgehende Oeffnung ausgeführt, welche sich zwischen der Innenwand der Ausnehmung 19 und der Breitseite 7 des Endgliedkörpers 2 erstreckt. Der Abstand zwischen der Vertiefung 113 und der Stirnfläche 5 des Endgliedkörpers 2 ist in bezug auf den Abstand zwischen dem Zahn 104 und dem Balken 31 am Schutzstück 35 so bemessen, dass der Balken 31 auf der Stirnfläche 5 des Endgliedkörpers 2 möglichst satt aufliegt. Zu diesem Zweck kann es von Vorteil sein, wenn die dem Balken 31 zugewandte Flanke 108 des Zahnes 104 gegenüber der Hauptfläche 103 des Stiles 70 schräg verläuft. Die Neigung dieser Zahnfläche 108 ist dabei derart, dass der Fuss dieser Fläche 108 näher zum Balken 31 liegt als jener Randbereich dieser Fläche 108, der sich an den Zahnkopf 78 anschliesst. Wegen der Zusammenwirkung zwischen der eine solche Neigung aufweisenden Zahnfäche 108 und der zum Balken 31 näher leigenden Vorderkante der Vertiefung 113 wird der Balken 31 des in die Ausnehmung 19 eingesteckten Schutzstückes 70 gegen die Stirnfläche 5 des Endgliedes 1 hin angezogen.

In Fig. 11 ist ein Endglied 1 dargestellt, dessen Ausbildung der Ausbildung jenes Endgliedes weitgehend ähnelt, welches in Fig. 6, 8 und 10 abgebildet ist. Beim Endglied 1 gemäss Fig. 11 ist das Schutzstück 38 so ausgeführt, dass je ein Widerhaken 104 sich an der jeweiligen Hauptfläche 102 und 103 des Schutzstückstieles 70 befindet. Dementsprechend muss das Endglied 1 mit je einer Vertiefung bzw. Oeffnung 113 in der jeweiligen Breitwand 7 desselben versehen sein.

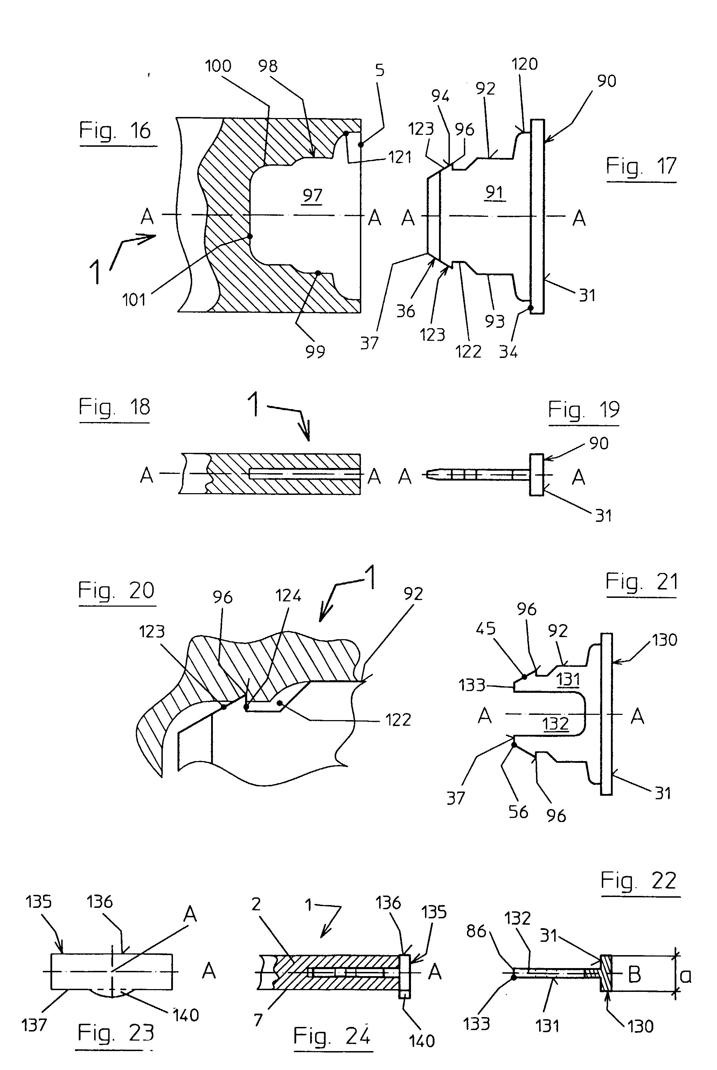

In Fig. 12 bis 15 ist eine weitere Ausführungsform des Endgliedes 1 des vorliegenden Massstabes dargestellt. Das in dieses Endglied 1 eingesetzte Schutzstück 39 weist einen Stiel 60 mit Schmalseiten 65 und 66 sowie mit Breitseiten 72 und schliesslich auch Widerhaken 73 und 74 auf, welche an den Schmalseiten 65 und 66 des Stieles 60 angebracht sind. Die Widerhaken 73 und 74 haben praktich dieselbe Form wie zum Beispiel die Widerhaken 53 und 54 des Endstückes 1 gemäss Fig. 5. Die Widerhaken 73 und 74 beim vorliegenden Stiel 60 sind allerdings kürzer und die Länge derselben gleicht praktisch der Höhe der Schmalwand 65 und 66 bzw. der Dicke des Stiles 60.

In Fig. 16 bis 20 ist eine noch weitere Ausführung des Endgliedes 1 des vorliegenden Gliedermassstabes dargestellt. Die freie Endpartie des Endgliedes 1 ist ebenfalls mit einer Ausnehmung 97 versehen, welche jedoch eine besondere Form auf weist. Der Querschnitt des Stils 91 des Schutzstückes 90 ist zwar auch rechteckförmig aber sonst weist dieser Stiel 91 ebenfalls eine besondere Form auf. Zumindest eine der Schmalseiten 92 des Schutzstückstieles 91 weist einen ersten und zum Balken 31 des T-förmigen Schutzstückes 90 näher liegenden Abschnitt 93 auf. Dieser Schmalseitenabschnitt 93 ist als eine Führungsfläche ausgeführt. Diese Stielschmalseite 92 weist ferner einen zweiten Abschnitt 94 auf, welcher zwischen dem ersten Stielabschnitt 93 und der freien Endpartie 37 des Schutzstückstieles 91 liegt. Dieser zweite Stiel-Seitenabschnitt 94 weist einen Befestigungshaken 96 auf. Die Breite des Stieles 91 ist im Bereich dieses Widerhakens 96 kleiner als im Bereich der Führungsfläche 93.

Die Schmalseiten 92 des Schutzstückstiles 91 weist auch einen dritten und sich an den Balken 31 dieses Schutzstückes 90 unmittelbar anschliessenden Abschnitt 120 auf. Dieser dritte Schmalseitenabschnitt 120 erstreckt sich entlang dem Balken 31 gegen eine der Endpartien desselben hin und er ist breiter als jener Bereich des Stieles 91, welcher die Führungsfläche 93 umfasst. Die Breite dieses dritten Stielbereiches 120 ist jedoch kleiner als die Länge des Balkens 31.

Die Breite der ersten Abschnittes des Stielkörpers 91, welcher die Führungsfläche 93 umfasst, ist etwa gleich gross wie die Breite des zweiten Stielabschnittes 94. An jenes Ende der Führungsfläche 93, welches der freien Endpartie 37 des Stieles 91 zugewandt ist, schliesst sich eine Einbuchtung 122 im Grundkörper des Stieles 91 an. Die Länge dieser Einbuchtung 122, gemessen in der Richtung der Längsachse A, ist so gross, dass die Einbuchtung 122 fast bis zum Anfang der Fasen 36 im freien Endbereich 37 des Stieles 91 reicht und in einem Abstand von den Fasen 36 an diesem Endbereich 37 endet. Zwischen diesem Ende bzw. Rand 124 (Fig. 20) der Einbuchtung 122 und dem Anfang des breiteren Abschnittes der Fase 36 ist eine gegenüber der Längsachse A schräg verlaufende Verbindungsfläche 123 in der Schmalseite 92 des Stieles 91 ausgeführt. Diese Verbindungsfläche 123 bildet eine der Flanken des Befestigungshakens 96. Die andere Flanke dieses Hakens 96 ist durch jenen Rand 124 der Einbuchtung 122 gebildet, welcher zur ersten Hakenflanke 123 näher liegt. Die zweite Hakenflanke 124 kann vorteilhaft senkrecht zur Längsachse A des Stieles 91 verlaufen. In einem solchen Fall weist der Haken 96 eine spitzige Nase auf.

Die Ausnehmung 97 im Endglied 1 weist ebenfalls einen rechteckförmigen Querschnitt auf, so dass der Stiel 91 in diese Ausnehmung 97 eingeführt werden kann. Zumindest eine der Schmalwände 98 dieser Ausnehmung 97 weist einen ersten Abschnitt 99 auf, welcher sich im mittleren Bereich der Tiefe dieser Aussnehmung 97 befindet. Dieser Ausnehmungsabschnitt 99 ist als eine Führungsfläche ausgeführt, die zum Zusammenwirken mit der entsprechenden Führungsfläche 93 am Schutzstückstiel 90 ausgebildet ist. Die schmale Wand 98 der Ausnehmung 97 weist ferner einen zweiten Abschnitt 100 auf, welcher sich näher an der Bodenpartie 101 der Ausnehmung 97 befindet bzw. welcher sich einerends an diese Bodenpartie 101 anschliesst. Die Wand dieses inneren Ausnehmungsabschnittes 101 ist zum Zusammenwirken mit dem Befestigungshaken 96 am Schutzstück 90 ausgeführt.

Die schmale Wand 98 der Ausnehmung 97 im Endglied 1 weist auch einen dritten Abschnitt 121 auf, welcher sich an die Mündung 5 der Ausnehmung 97 unmittelbar anschliesst. Der durch diesen dritten Wandabschnitt 121 begrenzte Hohlraum dient zur Aufnahme des dritten und diesem Hohlraum 97 zugewandten Abschnittes 120 am Schutzstückstil 91.

Die Haken 96 können in das Material der Schmalwand 98 am Endglied 1, welches zweckmässigerweise ein Kunststoff ist, im Bereich des zweiten Abschnittes 100 dieser Schmalwand 98 tief eindringen, wie dies beispielsweise aus Fig. 20 ersichtlich ist.

Das Schutzstück 130 gemäss Fig. 21 und 22 ist im wesentlichen gleich ausgebildet wie das Schutzstück gemäss Fig. 17 und 19. Der Stiel 131 dieses Schutzstückes 130 weist eine Aussparung 132 auf. Diese Aussparung 132 erstreckt sich von einer Teilfläche 133 der freien Endpartie 37 des Stieles 131 gegen den Balken 31 dieses Schutzstückes 130 hin. Das innere Ende der Aussparung 132 liegt in einem Abstand vom Schutzstückbalken 31. Die Kontur dieser Aussparung 132 hat im dargestellten Fall die Form des Buchstabens U, wobei die Enden der Schenkel einer solchen Aussparung 132 sich an die Teilfläche 133 der Stirnfläche 37 des Stieles 131 anschliessen. Die abgebildete Aussparung 132 ist zur Längsachse A des Schutzstückes 130 symmetrisch ausgeführt. Das Material, welches zwischen der Aussparung 132 und den äusseren Schmalseiten 92 des Stieles 131 vorhanden ist, bildet schmale Finger, an deren Aussenseite sich die Haken 96 befinden. Solche schmale Finger weisen eine grössere Nachgiebigkeit auf als der Stiel 91 gemäss Fig. 17, welcher aus vollem Material ist. Diese erhöhte Nachgiebigkeit der Stielfinger kann sich bei der Einführung des Endstückes 130 in das Endglied 1 des Gleidermassstabes vorteilhaft auswirken.

Fig. 23 und 24 zeigen eine weitere Ausführungsmöglichkeit des Endgliedes 1 des vorliegenden Gliedermassstabes. Der Balken 136 des Schutzstückes 135 an diesem Endglied 1 ist ebenfalls praktisch quaderförmig. Die Grösse der Grundfläche eines solchen Balkens 136 gleicht praktisch der Grösse der Stirnfläche 5 des Endstückes 1 oder sie ist kleiner. Von einer der längeren Seitenwände 137 des Balkens 136 steht ein Ausläufer 140 ab. Dieser Ausläufer 140 übersteht das Profil bzw. die Querschnittsfläche bzw. die Stirnfläche 5 des Endstück-Grundkörpers 2, und zwar in der Richtung senkrecht zur Längsachse A des Endgliedes 1. Folglich erhebt sich der Ausläufer 140 über jener Breitfläche 7 des Grundkörpers 2 des Endstückes 1, welche mit der den Ausläufer 140 aufweisenden Seitenwand 137 des quaderförmigen Balkens 136 fluchtet. Im dargestellten Fall hat der Ausläufer 140 eine abgerundete Form, obwohl die Form dieses Ausläufers 140 auch anders sein kann.

Weil das Schutzstück 135 in der Ausnehmung des Endgliedes 1 sehr fest sitzt, kann der Ausläufer 140 beispielsweise als Anschlag am Endglied 1 des Gliedermassstabes ausgenutzt werden, wenn gemessen wird. Der Ausläufer 140 wird an einer Kante des gemessenen Gegenstandes, welche von der messenden Person entfernt liegt, eingehakt und die messende Person kann dann an der ihr naheliegenden Stelle des Gegenstandes den Messwert vom Massstab ablesen. Die messende Person braucht bei der Verwendung des vorliegenden Massstabe nicht, zu der entfernten Stelle des Gegenstandes zu gehen, um zu prüfen, ob das entfernte Ende des Massstabes mit der Kante des Gegenstandes fluchtet. Es ist hier auch beschrieben worden, dass die Höhe des Balkens 136 in der Längsrichtung der Achse A ganzzahlig ist, d.h., dass sie beispielsweise 1mm beträgt. Da die Kante des gemessenen Gegenstandes an der Unterseite des Ausläufers 140 anschlägt, muss man bei einer genauen Messung zum abgelesenen Messwert noch die Höhe des Balkens 136 des Schutzstückes 135 addieren.

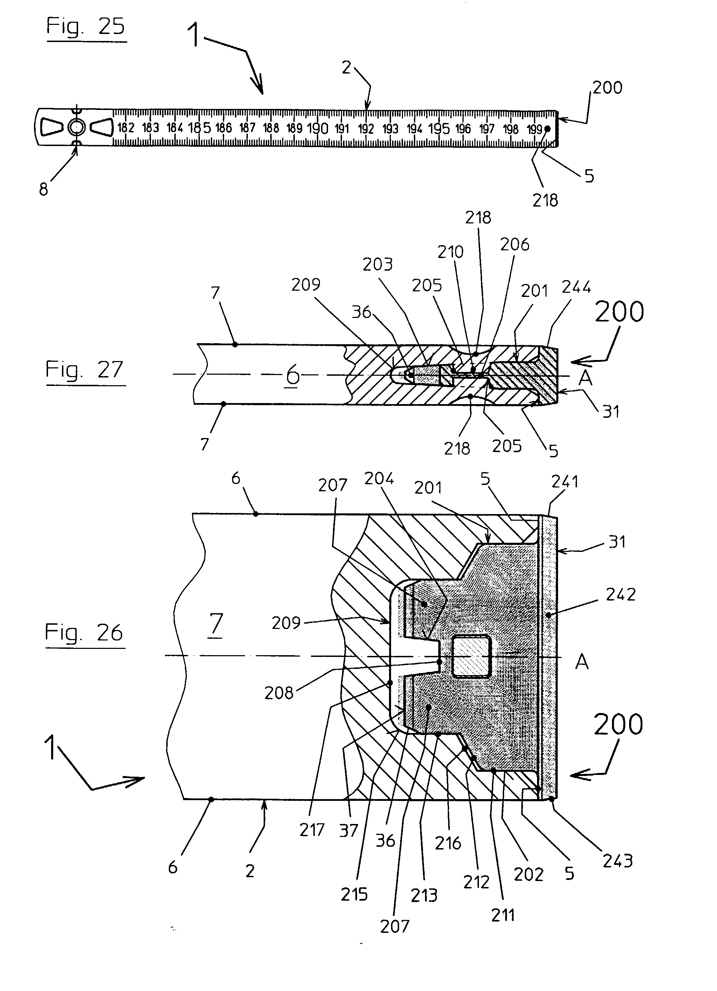

Fig. 25 zeigt in einer Draufsicht eines der Endglieder 1 eines Gliedermassstabes. Die Glieder des vorliegenden Massstabes sind vorteilhaft aus einem Kunststoff und sie weisen einen bei solchen Massstäben üblichen rechteckförmigen Querschnitt auf. Der Grundkörper 2 des abgebildeten Endgliedes 1 eines solchen Massstabes ist somit länglich und flach ausgebildet und er weist schmale Seitenflächen 6 sowie breite Seitenflächen 7 auf. Die freie Endpartie dieses Endgliedes ist mit einem Schutzstück 200 versehen, welches die Stirnfläche 5 dieses Endgliedes 1 gegen Abnützung schützt. Die andere Endpartie dieses Endgliedes 1 ist mit einem Teil einer Vorrichtung 8 versehen, welche die Einstellung der jeweils benachbarten Glieder des Massstabes in eine vorgegebene Lage zueinander ermöglicht.

Fig. 26 zeigt in einer Draufsicht und teilweise im Längsschnitt eine Ausführung der Endpartie des Endgliedes 1 aus Fig. 25, wobei ein im wesentlichen T-förmiges Schutzstück 200 in der freien Endpartie des Endgliedes 1 eingesetzt ist. Fig. 27 zeigt das Endglied 1 aus Fig. 26 in einer Seitenansicht und teilweise im Schnitt.

Die abgebildete Endpartie eines der Endglieder 1 des Gliedermassstabes ist mit einer Ausnehmung 209 versehen. Diese Ausnehmung 209 ist in der freien Endpartie des Anfangs- bzw. Endgliedes 1 des Massstabes ausgebildet und sie erstreckt sich von der Stirnfläche 5 dieser Endpartie in das Innere des Endgliedes 1 hinein. Der Querschnitt dieser Ausnehmung 209 ist im wesentlichen rechteckförmig, wobei sich die Abmessungen dieser Rechteckform mit zunehmender Tiefe dieser Ausnehmung 209 ändern können. Der Querschnitt der Rechteckform ist zur Längsachse A des Endgliedes 1 symmetrisch angeordnet.

Das Schutzstück 200 ist im wesentlichen T-förmig und es weist einen Balken 31 sowie einen von diesem Balken 31 abstehenden Stiel 201 auf. Der Balken 31 hat die Form eines Quaders. Die Länge dieses quaderförmigen Balkens 31 entspricht der Breite des Endgliedes 1. Dies bedeutet, dass die Länge des Balkens 31 der Breite des Grundkörpers 2 des Endgliedes 1 gleicht oder kleiner als diese ist. Die Breite des Balkens 31 gleicht praktisch der Dicke des Grundkörpers 2 des Endgliedes 1. Die Umfangsflächen 241, 242, 243 und 244 des Schutzstückbalkens 31 sind schräg ausgeführt, wobei sie vom Grunkörper 2 des Endgliedes 1 weg zusammenlaufend sind. Die Höhe bzw. die sich in der Richtung der Achse A des Schutzstückes erstreckende Abmessung des Schutzstückbalkens 31 kann ein ganzzahliges Vielfaches einer Masseinheit sein. Dieser Balken 31 kann somit beispielsweise ein zwei oder mehr Millimeter hoch sein. Dementsprechend ist dann der Grundkörper 2 dieses Endgliedes 1 gekürzt, damit dieses Endglied 1 die Gesamtlänge eines vorbekannten Endgliedes aufweist, welches kein Schutzstück aufweist.

Das Schutzstück 30 ist vorteilhaft aus Metall, wie zum Beispiel aus Stahl, Aluminium, Sintermetall oder auch aus Kunststoff ausgeführt. Wenn das Schutzstück aus Stahl ist, dann kann es als ganzes gehärtet sein, oder es kann wenigstens die Oberfläche des Schutzstückbalkens 31 gehärtet sein. Der Balken 31 kann sich vom Endglied 1 farblich unterscheiden.

Der Stiel 201 des Schutzstückes 200 ist flach bzw. plattenförmig und er ist einstückig mit dem Balken 31. Der Stiel 201 weist im wesentlichen einen rechteckförmigen Querschnitt auf, wobei die schmalen Seitenflächen 202 des Stieles 201 zu den schmalen Seitenflächen 6 des Endglied-Grundkörpers 2 zugewandt sind und praktisch parallel zu diesen liegen. Die breiten Seiten 203 des Stieles 201 sind den breiten Seitenflächen 7 des Endgliedes 1 zugewandt und sie laufen gegen das freie Ende 37 dieses Stieles 201 hin leicht zusammen. Die vom Balken 31 abgewandte Endpartie 37 des Stieles 201 ist zumindest im Bereich der Schmalseiten 202 des Stieles 201 mit Fasen 36 versehen, welche jedoch vorteilhaft an allen Rändern der Endpartie 37 ausgeführt sind.

Die Schmalseite 202 des Schutzstückstieles 201 weist einen ersten und sich an den Balken 31 des T-förmigen Schutzstückes 200 einerends anschliessenden Abschnitt 211 auf. Dieser Schmalseitenabschnitt 211 verläuft praktisch parallel zur Längsachse A des Stiels 201 bzw. parallel zur Schmalseite 6 des Endglied-Grundkörpers 2. An das andere Ende dieses ersten Wandabschnittes 211 schliesst sich ein zweiter Abschnitt 212 der Schmalseite 202 des Stieles 201 einerends an, welcher schräg verläuft und welcher gegen die Mittelachse A hin gerichtet ist. Die Endpartie dieses zweiten Abschnittes 212 der Schmalseite 202 liegt jedoch in einem Abstand von der Achse A. Schliesslich weist die Schmalseite 202 einen dritten Wandabschnitt 213 auf, welcher sich einerends an das zuletzt genannte Ende des zweiten Wandabschnittes 212 anschliesst, welcher praktisch parallel zur Längsachse A des Stieles 201 verläuft und dessen anderes Ende im Bereich der Endpartie 37 des Stiles 201 liegt. Die Breite des Stiels 201 im Bereich des dritten Wandabschnittes 213 ist somit kleiner als im Bereich des Stiels im Bereich des ersten Wandabschnittes 211. An das vom Balken 31 abgewandte Ende des dritten Schmalwand-Abschnittes 213 schliesst sich die bereits erwähnte Fase 36 an.

Die Endpartie 37 des Stiels 201 weist eine Aussparung 204 in der freien Endpartie 37 des Stiels 201 auf. Diese Aussparung 204 erstreckt sich von der Stirnfläche 36 der freien Endpartie 37 des Stiles 201 gegen den Balken 31 dieses Schutzstückes 200 hin. Das innere Ende bzw. die innere Kante 208 der Aussparung 204 liegt in einem Abstand vom Schutzstückbalken 31, wobei die Tiefe dieser Aussparung 204 kleiner ist als die Länge des dritten Abschnittes 213 der Schmalwand 202 des Stiles 201. Die Kontur dieser Aussparung 132 hat im dargestellten Fall die Form des Buchstabens U mit eckigem Bodenbereich und mit auseinanderlaufenden Schenkeln. Die abgebildete Aussparung 204 ist zur Längsachse A des Schutzstückes 200 symmetrisch angeordnet. Das Material des Stiels 201, welches zwischen der Aussparung 204 und dem jeweiligen dritten Wandabschnitt 213 des Stiles 201 vorhanden ist, bildet einen Lappen 207.

In der jeweiligen Haupt- bzw. Breitfläche 203 des Stiles 201 ist eine Vertiefung 205 ausgeführt. Diese Vertiefungen 205 weisen einen gemeinsamen Boden 206 auf und sie öffnen sich in zueinander entgegengesetzten Richtungen, d.h. zur jeweils gegenüberliegenden Breitseite 7 des Endgliedes 1 hin, wenn das Endstück in diesem eingesetzt ist. Im dargestellten Fall haben diese Vertiefungen 205 einen im wesentlichen quadratischen Grundriss und sie befinden sich etwa in der Mitte der Breite des Stiels 201, d.h. dass sie zur Längsachse A des Stiels 201 symmetrisch angeordnet sind. Die Vertiefungen 205 liegen ausserdem zwischen dem Bodenbereich 208 der Aussparung 204 und dem Balken 31 des Schutzstückes 200, wobei die Vertiefungen 205 sich etwa auf der Höhe des zweiten Abschnittes 212 der Schmalwand 202 des Stiles 201 befinden. Die Böden 206 dieser Vertiefungen 205 bilden einen Steg, welcher aus dem Material des Stiels 201 gebildet ist.

Die Ausnehmung 209 im Endglied 1 weist einen rechteckförmigen Querschnitt auf, so dass der Stiel 201 des Endstückes 200 in diese Ausnehmung 209 eingeführt bzw. eingesetzt werden kann. Die jeweilige Schmalwand 215 dieser Ausnehmung 209 weist einen ersten Abschnitt auf, welcher dem ersten Abschnitt 211 am Stiel 201 entspricht und welcher als eine der Führungsflächen für den Stiel 201 dient. Die Schmalwand 215 der Ausnehmung 209 weist ferner einen zweiten Abschnitt 216 auf, welcher dem zweiten Schmalwandabschnitt 212 am Stiel 201 entspricht. Dieser Wandabschnitt 216 ist gegenüber der Mündung 5 der Ausnehmung 209 in einem so grossen Abstand angeordnet, dass der zweite Wandabschnitt 212 des Stiels 201 auf diesem Wandabschnitt 216 nicht aufliegen kann, wenn das Schutzstück 200 in der Ausnehmung 209 eingesetzt ist. Schliesslich weist die Schmalwand 215 der Ausnehmung 209 einen dritten Abschnitt auf, welcher dem dritten Abschnitt 213 der Stielschmalwand 202 entspricht und welcher als Führungsfläche für diese Partie des Stiels 201 dient. Die Ausnehmung 209 ist so tief ausgeführt, dass der Boden 217 dieser Ausnehmung 209 sich in einem Abstand von der Stirnpartie 37 des Stiels 201 befindet. Die Form und der Verlauf der Breitseiten der Ausnehmung 209 im Endglied 1 entsprechen der Form und dem Verlauf der Breitseiten 203 des Stiels 201.

Nachdem der Stiel 201 in die Ausnehmung 209 eingesetzt worden ist, drückt man mit nicht dargestellten Mitteln und gegebenenfalls unter gleichzeitiger Anwendung von Hitze von aussen her auf das Material des Grundkörpers 2 des Endgliedes 1. Diese Einwirkung erfolgt an jenen Stellen des Grundkörpers 2, welche den Vertiefungen 205 im Stiel 201 des Schutzstückes 200 gegenüberliegen. Als Wirkmittel kann man in einem solchen Fall einen Gegenstand mit einer gegebenenfalls erhitzbaren Spitze verwenden. Das unter der Spitze der Druckmittel liegende Material des Grundkörpers 2 des Endgliedes 1 wird in das Innere der Ausnehmung 209 eingedrückt, wo es die Vertiefungen 205 im Endstück-Stiel 201 zumindest teilweise ausfüllt. Durch dieses in das Innere der Vertiefungen 205 getriebene Material des Endgliedes 1 wird der Stiel 201 im Endglied 1 festgehalten.

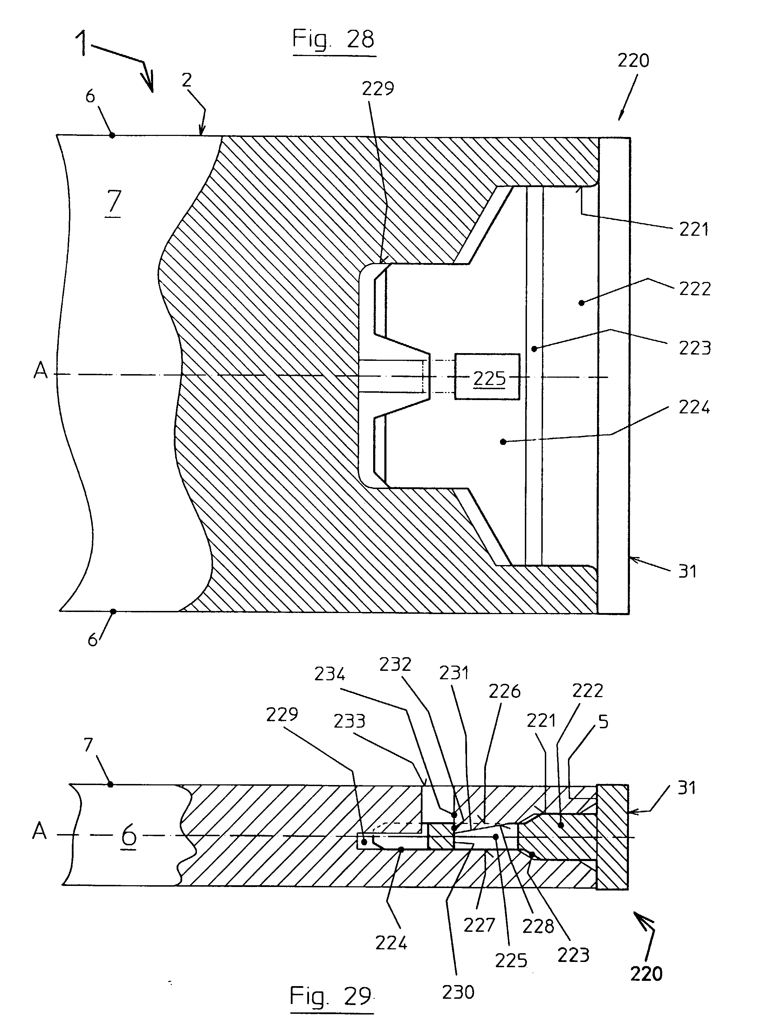

Fig. 28 zeigt in einer Draufsicht und teilweise im Schnitt eine weitere Ausführung der Endpartie des Endgliedes 1 des vorliegenden Gliedermassstabes. Fig. 29 zeigt in einer Seitenansicht und teilweise im Schnitt die freie Endpartie des Endgliedes nach Fig. 28.

Das Endglied 1 weist im vorliegenden Fall ein Schutzstück 220 auf, dessen Grundriss im wesentlichen gleich ausgebildet ist wie der Grundriss des Schutzstückes 200 gemäss Fig. 26 und 27. Anstelle der vorstehend genannten Vertiefungen weist der Stiel 221 des vorliegenden Schutzstückes 220 jedoch eine durchgehende Oeffnung 225 auf. Ausserdem weist der Stil 221 dieses Schutzstückes 220 eine erste und dickere Partie 222 auf, welche sich an den Balken 31 des Schutzstückes 220 einerends anschliesst.

Das andere Ende dieser Anfangspartie 222 geht in eine Uebergangspartie 223 über, welche mit schräg gegen die Achse A des Schutzstückes 220 hin zusammenlaufenden Wänden versehen ist. An diese Uebergangspartie 223 schliesst sich dann eine Endpartie 224 des Stieles 221 an, deren Dicke kleiner ist als die Dicke der Anfangspartie 222. In dieser dünneren Endpartie 224 des Stiels 221 ist die genannte Oeffnung 225 ausgeführt.

Die Schmalseiten der Ausnehmung 229 im Endglied 1 sind im Grundriss im wesentlichen gleich geformt wie die Schmalseiten der Ausnehmung 209 bei der vorstehend beschriebenen Ausführungsform. Die Breitflächen 226 der vorliegenden Ausnehmung 229 sind dagegen entsprechend der veränderlichen Dicke des Stiles 221 abgestuft ausgeführt. Die Innenwand zumindest einer der Breitseiten 226 der Ausnehmung 229 ist mit einem Einhängezahn 228 versehen, welcher von dieser Innenwand 226 absteht und in das Innere der Ausnehmung 229 hinein ragt. Dieser Zahn 228 ist gegenüber der Achse A der Ausnehmung 229 symmetrisch angeordnet, sodass er sich in der Mitte der Breite der Ausnehmung 229 befindet. Die Breite des Einhängezahnes 228 ist etwas kleiner als die Breite der Oeffnung 225 im Stiel 221.

Der Einhängezahn 228 weist eine schräg verlaufende Flanke 231 sowie eine steil verlaufende Flanke 232 auf. Die gegenüber der Breitseite 7 des Endstückes 1 schräg verlaufende Flanke 231 ist so gerichtet, dass die Höhe des Zahnes 228 mit dem zunehmenden Abstand von der Mündung 5 der Ausnehmung 229 zunimmt. Die steil verlaufende Zahnflanke 232 verläuft praktisch parallel zur Mündung 5 der Ausnehmung 229.

In der mit dem Einhängezahn 228 versehenen Breitwand 7 der Ausnehmung 229 ist ein Durchbruch 233 ausgeführt, dessen Grundriss praktisch viereckig ist. Jene Wand 234 dieses Durchbruches 233, welche zur Mündung 5 der Vertiefung 229 parallel und zu dieser näher liegt, befindet sich in einem Abstand von der Mündung 5. Dieser Abstand ist derart gewählt, dass diese Durchbruch-Vorderwand 234, wenn das Schutzstück 220 in der Ausnehmung 229 eingesetzt ist, mit jener Wand 230 der Oeffnung 225 im Stil 221 in einer Ebene liegt, welche zur Stirnfläche des Balkens 31 des Schutzstückes 220 parallel verläuft und von diesem entfernt liegt. Die steile Zahnflanke 232 befindet sich in derselben Ebene wie die Durchbruch-Vorderwand 234 und deswegen stellt sie eine Fortsetzung der Vorderwand 234 des Durchbruches 233 im Inneren der Ausnehmung 229 im Endstück 1 dar. Diese steile Zahnflanke 234 kann daher mit der rückwärtigen Wand 230 der Oeffnung 225 im Stiel 221 in Eingriff stehen. Der Durchbruch 233 im Endstück 1 ermöglicht eine vorteilhafte Herstellung des genannten Einhängezahnes 228.

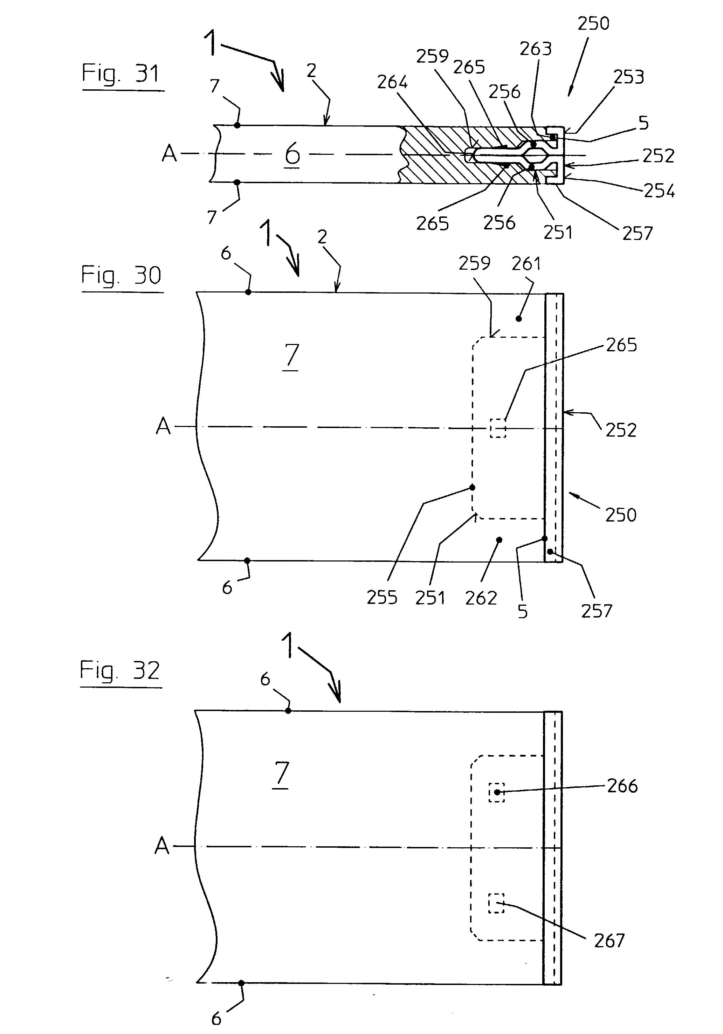

Fig. 30 zeigt in einer Draufsicht eine weitere Ausführung der Endpartie des Endgliedes 1, wobei ein praktisch T-förmiges Schutzstück 250 in der freien Endpartie des Endgliedes 1 eingesetzt ist. Fig. 31 zeigt in einer Seitenansicht und teilweise im Schnitt die freie Endpartie des Endgliedes 1 nach Fig. 30.

In der freien Endpartie des Endstückes 1 ist eine Ausnehmung 259 ausgeführt, welche im wesentlichen schlitzförmig ist, wobei die Länge dieses Schlitzes 259, welche parallel zur Breitseite 7 des Endgliedes gemessen wird, kleiner ist als die Breite der Breitseite 7 des Endgliedes 1. Zwischen dem jeweiligen Ende des Schlitzes 259 und der betreffenden Schmalseite 6 des Grundkörpers 2 gibt es somit eine Endwand 261 bzw. 262. Die Ausnehmung 259 weist einen ersten Abschnitt 263 auf, welcher sich einerends an die Mündung 5 anschliesst. Die Ausnehmung 259 weist ferner einen zweiten Abschnitt 264 auf, welcher sich an das zweite Ende des ersten Ausnehmungsabschnittes 263 einerends anschliesst und dessen Höhe bzw. Breite kleiner ist als die des ersten Abschnittes 263.

In zumindest einer der breiten Innenwände der Ausnehmung 259 ist eine Vertiefung 265 ausgeführt, welche einen schräg verlaufenden Boden aufweist. Diese Vertiefung 265 hat mit Vorteil einen im wesentlichen quadratischen Grundriss. Die Tiefe dieser Vertiefung 265 nimmt gegen die Mündung 5 der Ausnehmung 259 zu. Das Schutzstück 250 ist im wesentlichen T-förmig und setzt sich aus einem Stiel 251 und einem Balken 252 zusammen. Die Breite des Stiels 251 ist kleiner als die Breite der Breitseite 7 des Endgliedes 1 und sie entspricht der Länge der schlitzförmigen Ausnehmung 259 im Endstück 1. Die Länge des Balkens 252 gleicht praktisch der Breite der Breitseite 7 des Endgliedes 1.

Das Schutzstück 250 ist aus einem Streifen Blech und dieser Blechstreifen ist so geformt, dass er zwei gleich geformte Hälften 253 und 254 bildet. Jede dieser Hälften 253 und 254 ist im wesentlichen L-förmig, wobei die Enden der längeren Schenkel dieser L-Hälften 253 und 254 miteinander verbunden sind und die innenliegende Endpartie 255 des Stiels 251 bilden. Im sich an diese Endpartie 255 anschliessenden Bereich des jeweiligen L-Schenkels ist ein von der Oberfläche desselben abstehender Einhängezahn ausgebildet, welcher in der betreffenden Vertiefung 265 liegt und derart geformt ist, dass er diese Vertiefung 265 praktisch ausfüllt und mit dieser dabei in Eingriff stehen kann.

Zwischen dem Zahn und dem Balken 252 des Endstückes 250 ist der längere L-Schenkel mit einer Ausbuchtung 256 versehen, welche sich in der Richtung des anderen, kürzeren L-Schenkels wölbt. Da die Ausbuchtungen 256 an den beiden längeren L-Schenkeln einander entgegengesetzt gerichtet sind, bilden sie eine Verdickung des Stiels 251. Diese Verdickung kommt in den ersten, breiteren Abschnitt 263 der Ausnehmung 269 zu liegen. Die freie Endpartie 257 des anderen, kürzeren L-Schenkels ist rückwärts, d.h. parallel zum ersten L-Schenkel gebogen und in einem entsprechenden Falz in der Aussenkante des Endgliedes 1 eingelassen.

Die Ausführung des Endschenkels 1 gemäss Fig. 32 unterscheidet sich vom Endschenkel 1 gemäss Fig. 30 bzw. 31 eigentlich nur darin, dass die Innenseite der Ausnehmung mit zwei Vertiefungen 266 und 267 versehen ist. Je eine dieser Vertiefungen 266 und 267 ist links und rechts von der Längsachse A des Endstückes angeordnet. Der Stiel des in der Ausnehmung eingesetzten Schutzstückes weist zwei entsprechende und dementsprechend angeordnete Zähne auf.

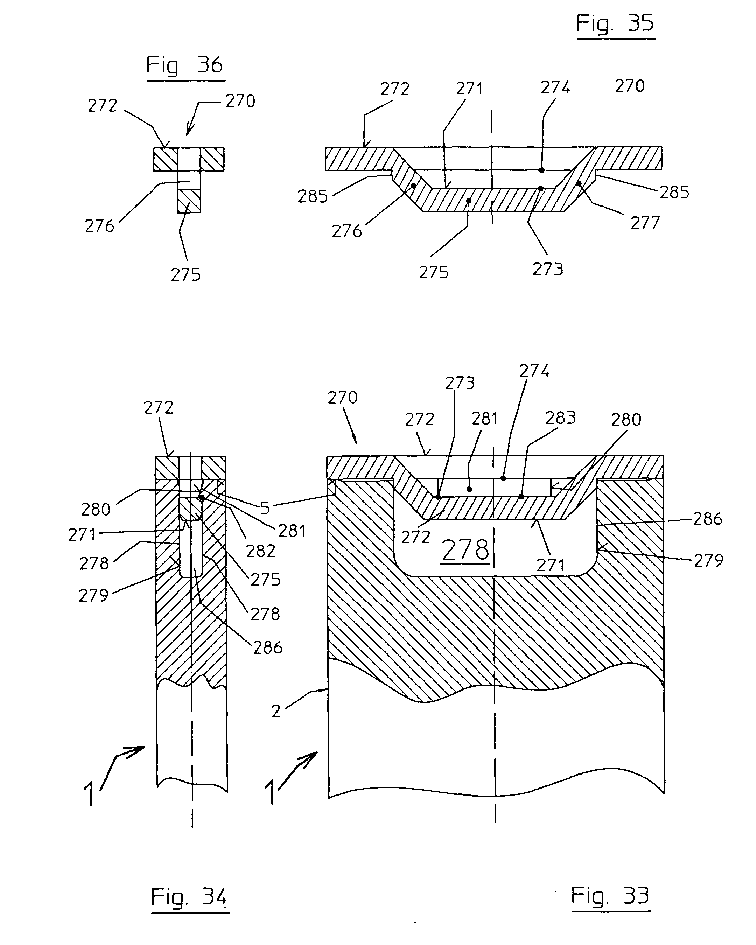

Fig. 33 zeigt in einer Draufsicht und teilweise im Schnitt eine weitere Ausführung der Endpartie des Endgliedes 1, wobei ein praktisch T-förmiges Schutzstück 270 in der freien Endpartie des Endgliedes 1 eingesetzt ist. Ferner zeigt Fig. 34 in einer Seitenansicht und teilweise im Schnitt die freie Endpartie des Endgliedes nach Fig. 33, Fig. 35 zeigt in Längsschnitt das T-förmige Schutzstück aus Fig. 33 und Fig. 36 zeigt im Querschnitt das T-förmige Schutzstück aus Fig. 33.

In der freien Endpartie des Endstückes 1 ist eine Ausnehmung 279 ausgeführt, welche ähnlich wie die Ausnehmung 259 (Fig. 30 und 31) schlitzförmig ist. Diese Ausnehmung 279 weist Breitseiten 278 sowie Schmalseiten 286 auf. Im Unterschied zur vorstehend beschriebenen Ausnehmung 259 weist die vorliegende Ausnehmung 279 keine Abstufung in ihren Breitseiten auf, sodass die Breite dieser Ausnehmung 279 über die ganze Höhe ihrer Breitseiten 278 gleich gross ist.

Im Bereich der Stirnfläche 5 des Endstückes 1 ist ein von einer der Breitseiten 278 der Ausnehmung 279 abstehender Einhängezahn 280 ausgebildet. Dieser Zahn 280 weist eine schräg steigende Flanke 281 sowie eine steil verlaufende Flanke 282 auf. Die unten liegende Kante der schräg verlaufenden Flanke 281 des Zahnes 280 fällt mit der betreffenden äusseren Kante der Ausnehmung 279 in der Stirnfläche 5 des Endstückes 1 zusammen. Die schräg verlaufende Flanke 281 erstreckt sich von dieser Kante weg und steigend in das Innere der Ausnehmung 279 hinein. An die sich im Inneren der Ausnehmung 279 befindliche und oben liegende Kante 283 der schrägen Flanke 281 schliesst sich die steile Flanke 282 des Einhängezahnes 280 an. Die Kammkante 283 dieses Zahnes 280 verläuft praktisch geradlinig. Die steile Zahnflanke 282 verläuft praktisch parallel zur Mündung 5 der Ausnehmung 279 im Endglied 1.

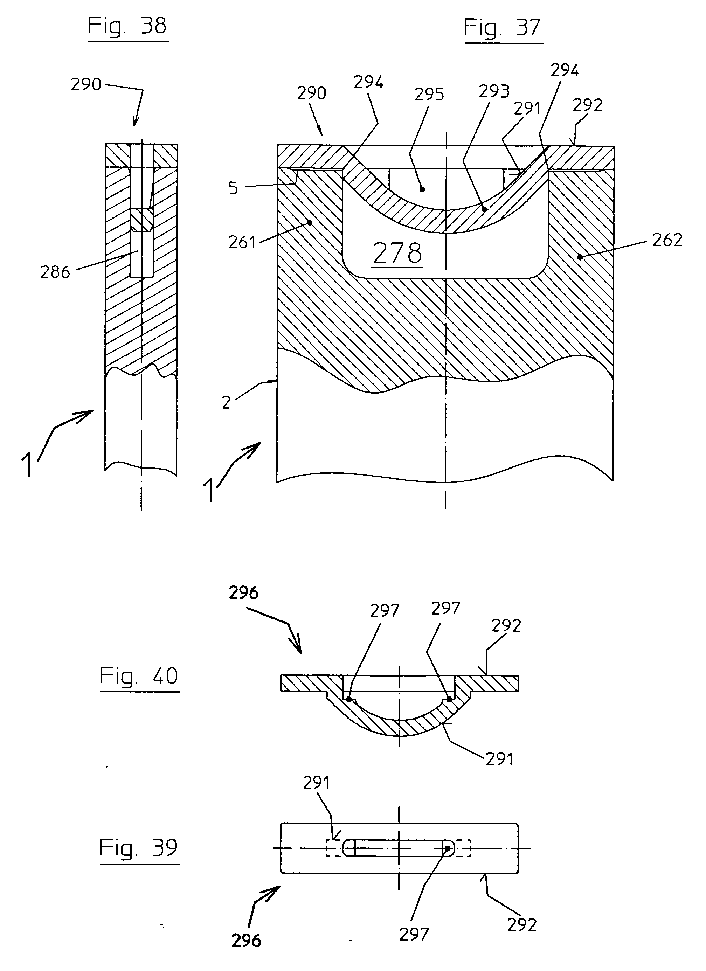

Das T-förmige Schutzstück 270 weist einen Stiel 271 und einen Balken 272 auf. Als Rohling für die Herstellung eines solchen Schutzstückes 270 dient ein planes Materialstück, dessen Grundriss (Fig. 39) der Form der Stirnfläche 5 des Endstückes 1 praktisch gleicht. Im mittleren Bereich dieses Materialstückes wird ein Materialstreifen aus der Ebene dieses Materialstückes in einer an sich bekannten Weise herausgebogen bzw. -gedrückt bz. herausgezogen. Dadurch entsteht ein im wesentlichen bügelförmiges Gebilde. Dieses Gebilde dient als der Stiel 271 des Schutzstückes 270. Die Breite des Materialstreifens bzw. des Stieles 271 gleicht der Breite der Ausnehmung 279 oder sie ist etwas kleiner. Der herausgebogene Streifen 271 kommt in das Innere der Ausnehmung 279 im Endstück 1 zu liegen. Der unverformte Teil des Materialstückes kommt auf die Stirnfläche des Endstückes 1 zu liegen und er bildet den Balken 272 des Schutzstückes 270.

Der herausgezogene Streifen 271 des in Fig. 33 und 35 dargestellten Schutzstückes 270 weist einen Steg 275 auf, welcher einen mittleren Abschnitt des Stiels 271 darstellt, welcher praktisch geradlinig ist und welcher praktisch parallel zum Balken 272 verläuft. An das jeweilige Ende dieses Steges 275 schliesst sich einerends ein Schenkel 276 bzw. 277 an. Diese Stege 276 und 277 verlaufen geradlinig und gegenüber dem Steg 275 schräg. Das andere Ende des jeweiligen Schenkels 276 bzw. 277 schliesst sich an den Balken 272 des Schutzstückes 270 an. Beim Ziehen des Streifens 271 aus der Ebene des Balkens 272 gelangt die Oberseite 273 des Streifens 271 unter die Unterseite 274 des Balkens 272. Die Entfernung zwischen diesen zwei Seiten 273 und 274 des Schutzstückes 270 entspricht der Länge des Einhängezahnes 280. Während das Schutzstück 270 in die Ausnehmung 279 eingesetzt wird, gelangt die Oberseite 273 des auf der Schrägflanke 281 des Einhängezahnes 280 gleitenden Steges 275 am Stiel 271 bis unter die Steilflanke 282 des Einhängezahnes 280. Dann springt der Steg 275 hinter die steile Flanke 282 des Einhägezahnes 280, wodurch das Schutzstück 270 in der Ausnehmung 279 befestigt ist.

Im Uebergangsbereich zwischen der Unterseite 274 des Balkens 272 und der Unterseite des jeweiligen Stielschenkels 276 bzw. 277 ist ein L-förmiger Einschnitt 285 ausgeführt. Einer der Schenkel dieses Einschnittes 285 liegt in der Ebene der Unterseite 274 des Balkens 272. Der andere Schenkel dieses L-förmigen Einschnittes 285 steht rechtwinklig zum erst genannten Schenkel dieses Einschnittes 285 und somit auch rechtwinklig zum Balken 272. Der Abstand zwischen den zum Balken 272 rechtwinklig stehenden L-Schenkeln am Stiel 271 entspricht der Länge der Ausnehmung 279 bzw. dem Abstand zwischen den Schmalseiten 286 der Ausnehmung 279. Die Eckpartien am Endglied 1, welche zwischen der Stirnfläche 5 des Endstückes 1 und den Schmalwänden 286 der Ausnehmung 279 vorhanden sind, können in den L-Ausnehmungen 285 Platz finden. Die zum Balken 272 rechtwinklig stehenden Schenkel der L-Einschnitte 285 definieren genau die Lage des Schutzstückes 270 in der Richtung der längeren Abmessung des Querschnittes des Endgliedes 1, damit kein Teil des Balkens 272 die äusseren Seitenflächen des Endgliedes 1 überstehen kann.

Fig. 37 zeigt in einer Draufsicht und teilweise im Schnitt eine weitere Ausführung der Endpartie des Endgliedes 1, wobei ein praktisch T-förmiges Schutzstück 290 in der freien Endpartie des Endgliedes 1 eingesetzt ist. Fig. 38 zeigt in einer Seitenansicht und teilweise im Schnitt die freie Endpartie des Endgliedes 1 nach Fig. 37.

Die Ausnehmung 279 im vorliegenden Endglied 1 ist im wesentlichen so ausgebildet, wie sie im Zusammenhang mit Fig. 33 und 34 beschrieben worden ist. Diese Ausnehmung 279 weist somit ebenfalls Breitseiten 278 und Schmalseite 286 auf. Auch das Schutzstück 290 ähnelt sehr dem vorstehend beschriebenen Schutzstück 270. Beim vorliegenden Schutzstück 290 ist der den Stiel 291 dieses Schutzstückes 290 bildende und aus dem Material des Balkens 292 herausgezogene Bügel bzw. Stiel 291 allerdings bogenförmig. Damit das Schutzstück 290 im Endglied 1 genau sitzt, muss die Steilflanke 293 des Einhängezahnes 295 dementsprechend gekrümmt bzw. bogenförmig sein.

Im Bereich der Unterseite des Ueberganges zwischen dem Balken 292 und dem Stiel 291 sind die bereits beschriebenen L-förmigen Einschnitte 294 in der Unterseite des Schutzstückes 290 ausgeführt. Die zum Balken 292 rechtwinklig stehenden Schenkel der L-Einschnitte 294 definieren genau die Lage des Schutzstückes 290 in der Richtung der längeren Abmessung des Querschnittes des Endgliedes 1, damit kein Teil des Balkens 292 die äusseren Seitenflächen des Endgliedes 1 überstehen kann.

In Fig. 39 ist in Frontansicht eine weitere Ausführung des T-förmigen Schutzstückes 296 und in Fig. 40 ist das T-förmige Schutzstück aus Fig. 39 im Längsschnitt gezeigt. Das Schutzstück 296 gemäss Fig. 39 und 40 entspricht dem vorstehend beschriebenen Schutzstück 290. Beim vorliegenden Schutzstück 296 sind noch zweite L-förmige Einschnitte 297 in der Oberseite des Bügels 291 im Bereich des jeweiligen Ueberganges zwischen dem Stiel 291 und dem Balken 292 ausgeführt.

## Patentansprüche

1. Gliedermassstab mit zumindest einem Schutzstück (30), welches an zumindest einem der Endglieder (1) des Gliedermassstabes angebracht ist, welches T-förmig ist und dessen Stiel (50) im Endglied (1) des Gliedermassstabes eingelassen bzw. eingesetzt ist, dadurch gekennzeichnet, dass eine sacklochförmige Ausnehmung (19) in der freien Endpartie des Endgliedes (1) von der Stirnfläche (5) dieser Endpartie her ausgeführt ist, dass die Breite des Stieles (50) des Schutzstückes (30) kleiner ist als die Breite des Endgliedes (1) und dass Mittel (53) zur Halterung des Schutzstückes (30) im Endglied (1) sich im Inneren des Endgliedes (1) befinden.

2. Gliedermassstab nach Anspruch 1, dadurch gekennzeichnet, dass der Stiel (50;60;70;91;131) des T-förmigen Schutzstückes (30,35,38,39,90,130) flach ist, dass der Schutzstückstiel wenigstens einen Befestigungshaken (53,54;73,74;96;104) aufweist, dass die Form des Querschnittes des Sackloches bzw. der Ausnehmung (19;97) im Endglied (1) der Form des Querschnittes des Stieles entspricht und dass der Befestigungshaken mit der Wand der Ausnehmung im Endglied in Eingriff stehen kann.

3. Gliedermasstab nach Anspruch 2, dadurch gekennzeichnet, dass der Stiel einen rechteckförmigen Querschnitt aufweist, dass der Befestigungshaken an einer der Seiten eines solchen Stieles ausgeführt ist, dass der Befestigungshaken (53,54;73,74;96;104) die Form eines Sägezahnes aufweisen kann und dass die Kante bzw. der Kamm bzw. der Kopf (78) des Befestigungshakens sich senkrecht zur Längsachse A des Stieles erstreckt.

4. Gliedermassstab nach Anspruch 3, dadurch gekennzeichnet, dass mindestens eine der Breitseiten (102 bzw. 103) des Stieles (70) den Befestigungshaken (104) aufweist, welcher sich über einen Abschnitt der Breitseite (102 bzw. 103) erstreckt, dass dieser Haken (104) sich im mittleren Bereich der Breitseite (102;103) befindet und dass die zu diesem Haken gegenüberliegende Wand der Ausnehmung (19) im Endglied (1) eine Vertiefung (113) für die Aufnahme des Hakens (104) aufweist.

5. Gliedermassstab nach Anspruch 1, dadurch gekennzeichnet, dass der Balken (136) des Schutzstückes (135) quaderförmig ist, dass die Grösse der Grundfläche dieses Balkens (136) der Grösse der Stirnfläche (5) des Endstückes (1) entspricht, und dass ein Ausläufer (140) an zumindest einer der Seitenwände (137) des Balkens (136) ausgeführt ist, welcher von dieser Seitenwand (137) absteht.

6. Gliedermassstab nach Anspruch 1, dadurch gekennzeichnet, dass in der jeweiligen Haupt- bzw. Breitfläche (203) des Stieles (201) eine Vertiefung (205) ausgeführt ist, dass eine Anhäufung (210) des Materials des Endgliedes (1) sich von der Innenseite der Ausnehmung (209) im Endglied (1) erhebt und dass diese Anhäufung (210) in der Vertiefung (205) liegt.

7. Gliedermassstab nach Anspruch 6, dadurch gekennzeichnet, dass die Vertiefungen (205) einen gemeinsamen Boden (206) aufweisen und sich in zueinander entgegengesetzten Richtungen öffnen, dass diese Vertiefungen (205) vorteilhaft einen im wesentlichen quadratischen Grundriss aufweisen, dass die Schmalseite (202) des Schutzstückstieles (201) einen ersten und sich an den Balken (31) des T-förmigen Schutzstückes (200) einerends anschliessenden Abschnitt (211) aufweist, dass an das andere Ende dieses ersten Wandabschnittes (211) sich ein zweiter Abschnitt (212) der Schmalseite (202) des Stieles (201) einerends anschliesst, welcher schräg verläuft und welcher gegen die Mittelachse A hin gerichtet ist, dass die Schmalseite (202) einen dritten Wandabschnitt (213) aufweist, welcher sich einerends an das zuletzt genannte Ende des zweiten Wandabschnittes (212) anschliesst, welcher parallel zur Längsachse A des Stieles (201) verläuft und dessen anderes Ende im Bereich der Endpartie (37) des Stieles (201) liegt, dass die jeweilige Schmalwand (215) der Ausnehmung (209) einen ersten Abschnitt aufweist, welcher dem ersten Abschnitt (211) am Stiel (201) entspricht, dass die Schmalwand (215) ferner einen zweiten Abschnitt (216) aufweist, welcher dem zweiten Schmalwandabschnitt (212) am Stiel (201) entspricht, dass die Schmalwand (215) einen dritten Abschnitt aufweist, welcher dem dritten Abschnitt (213) der Stielschmalwand (202) entspricht und welcher als Führungsfläche für diese Partie des Stiels (201) dient, dass die Ausnehmung (209) so tief ausgeführt ist, dass der Boden (217) derselben sich in einem Abstand von der Stirnpartie (37) des Stiels (201) befindet, dass diese Endpartie (37) des Stiels (201) eine Aussparung (204) in der freien Endpartie (37) des Stiels (201) aufweist.

8. Gliedermassstab nach Anspruch 1, dadurch gekennzeichnet, dass die Innenwand zumindest einer der Breitseiten (226) der Ausnehmung (229) mit einem Einhängezahn (228) versehen ist, dass dieser Zahn (228) von der Innenwand absteht und mit einer der Wände einer Vertiefung (225) im Stiel (221) des Schutzstückes (220) in Eingriff steht und dass diese Vertiefung (225) als eine durchgehende Oeffnung ausgeführt sein kann.

9. Gliedermassstab nach Anspruch 1, dadurch gekennzeichnet, dass das T-förmige Schutzstück (270) einen planen bzw. plattenförmigen Materialabschnitt (272) aufweist, dass der Grundriss dieses Plattenabschnittes (272) der Form der Stirnfläche (5) des Endstückes (1) gleicht, dass dieses Materialstück (272) der Stirnfläche (5) des Endgliedes (1) zugeordnet ist, sodass der plattenförmige Materialabschnitt (272) den Balken des T-förmigen Schutzstückes (270) darstellt, dass im mittleren Bereich dieses Plattenstückes (272) ein Streifen (271) aus der Ebene dieses Materialstückes (272) herausgebogen ist, sodass ein bügelförmiges Gebilde (271) dadurch entsteht, dass dieser Bügelstreifen (271) im Inneren der Ausnehmung (279) im Endstück (1) liegt und den Stiel des Schutzstückes (270) darstellt, dass ein Einhängezahn (280) im Inneren der Ausnehmung (279) angeordnet ist, welcher sich im Mündungsbereich der Ausnehmung (279) befindet und von einer der Innenwände dieser Ausnehmung absteht und dass der bügelförmige Stil (271) mit diesem Zahn (280) im Eingriff steht.

10. Gliedermassstab nach Anspruch 1, dadurch gekennzeichnet, dass in zumindest einer der breiten Innenwände der Ausnehmung (259) eine Vertiefung (265) ausgeführt ist, dass das Schutzstück (250) zwei gleich geformte Hälften (253,254) enthält, dass jede von diesen Hälften (253,254) im wesentlichen L-förmig ist, dass die Enden der im Inneren der Ausnehmung (259) liegenden Schenkel dieser L-Hälften (253,254) miteinander verbunden sind, sodass diese L-Schenkel zusammen den Stiel (251) dieses Schutzstückes (250) darstellen, dass der jeweilige innere L-Schenkel mit einem von der Aussenseite desselben abstehenden Einhängezahn (265) versehen ist, dass dieser Zahn (265) mit der Vertiefung in der Wand der Ausnehmung (259) im Eingriff steht und dass die anderen L-Schenkel sich ausserhalb der Ausnehmung (259) befinden, auf der Stirnfläche (5) des Endstückes (1) aufliegen und den Balken (252) dieses Schutzstückes (250) bilden.

## Claims

1. Folding rule with at least one protective piece (30), which is arranged on at least one of the end members (1) of the folding rule and which is T-shaped, whereby the stalk (50) of this T-shaped piece is let or put in into the end member (1) of the folding rule, characterized in that a blind hole-shaped recess (19) is carried out in the free end portion of the end member (1), namely starting from the front surface (5) of this end portion, that the width of the stalk (50) of the protective piece (30) is smaller than the width of the end member (1) and that means (53) decide for holding of the protective piece (30) in the end member (1) are placed in the inside of the end member (1).

2. Folding rule according to the claim 1, characterized in that, the stalk (50;60;70;91;131) of the T-shaped protective piece (30,35,38,39,90,130) is flat, that said stalk shows at least one securing hook (53,54;73,74;96;104), that the form of the cross-section of the blind hole or of the recess (19;97) in the end member (1) corresponds to the form of the cross-section of the stalk and that the securing hook can be in gear with the wall of the recess in the end member.

3. Folding rule according to the claim 2, characterized in that the stalk shows a rectangular cross-section, that the securing hook is carried out at one of the sides of such a stalk, that the securing hook (53,54;73,74;96;104) can be formed as a saw-tooth, and that the edge or the comb or the head (78) of the securing hook extends perpendicularly to the longitudinal axis A of the stalk.

4. Folding rule according to the claim 3, characterized in that at least one of the broadsides (102 or 103) of the stalk (70) is provided with the securing hook (104) which extends over a section of the broadside (102 or 103), that this hook (104) is placed in the middle area of the broadside (102;103) and that a deepening (113) for the receiving of the hook (104) is carried out in that one wall of the recess (19) in the end member (1), which is opposite to this hook.

5. Folding rule according to the claim 1, characterized in that the beam (136) of the protective piece (135) is shaped as parallelepiped, that the size of the base of this beam (136) corresponds to the size of the front surface (5) of the end piece (1) and that an extension (140) is carried out on at least one of the side walls (137) of the beam (136), whereby said extension sticks out from this side wall (137).

6. Folding rule according to the claim 1, characterized in that a deepening (205) is carried out in the respective main or wide surface (203) of the stalk (201), that an agglomeration (210) of the material of the end member (1) rises from the inside of the recess (209) in the end member (1) and that this agglomeration (210) lies in the deepening (205).

7. Folding rule according to the claim 6, characterized in that the deepenings (205) show a common ground (206) and open in to each other opposite directions, that these deepenings (205) have advantageously an essentially quadratic plan view, that the narrow side (202) of the stalk (201) of the protective piece has a first section (211), one end of which is attached to to the beam (31) of the T-shaped of protective piece (200), that one end of a second section (212) of the narrow side (202) of the stalk (201) is attached to the other end of said first wall section (211), that this second section (212) extends diagonally and is directed against the middle axis A, that said narrow side (202) shows a third wall-section (213), one end of which is connected to the last named end of the second wall section (212), that said third wall section (213) extends parallel to the longitudinal axis A of the stalk (201), that the other end of the third wall section lies in the area of the end portion (37) of the stalk (201), that the respective narrow wall (215) of the recess (209) shows a first section, which corresponds to the first section (211) on the stalk (201), that the narrow wall (215) furthermore shows a second section (216), which corresponds to the second narrow-wall-section (212) on the stalk (201), that the narrow wall (215) shows a third section, which corresponds to the third section (213) of the stalk-narrow-wall (202) and which serves as leading surface for this part of the stalk (201), that the recess (209) is carried out so deeply, that the ground (217) of the same is in a distance from the front part (37) of the stalk (201), and that this end portion (37) of the stalk (201) shows a gap (204), which is carried out in the free end portion (37) of the stalk (201).

8. Folding rule according to the claim 1, characterized in that the interior wall of at least one of the broad sides (226) of the recess (229) is provided with a barb (228), that this barb (228) sticks out from the interior wall and engages one of the walls of a deepening (225) in the stalk (221) of the protective piece (220) in intervention and that this deepening (225) can be carried out as a throughhole.

9. Folding rule according to the claim 1, characterized in that the T-shaped protective piece (270) has a flat or plate-shaped material section (272), that the plan view of this plate-shaped section (272) is equal to the form of the front surface (5) of the end piece (1), that this material piece (272) is assigned to the front surface (5) of the end member (1), so that the plate-shaped material section (272) represents the beam of the T-shaped protective piece (270), that a strip (271) is bent out from the plane of said plate-shaped piece (272), whereby said strip (270) is arranged in the middle area of said plate-shaped piece (272) and forms a bow- or yoke-shaped structures (271), that this yoke-shaped strip (271) lies in the inside of the recess (279) in the end piece (1) and represents the stalk of the protective piece (270), that a barb (280) is arranged in the inside of the recess (279), that this barb is placed in the area of the orifice of the recess (279) and sticks out from one of the interior walls of this recess and that the bow- or yoke-shaped stalk (271) engages said barb (280).

10. Folding rule according to the claim 1, characterized in that a deepening (265) is carried out in at least one of the wide interior walls of the recess (259), that the protective piece (250) consists of two equally shaped halves (253,254), that each one of these halves (253,254) is essentially L-shaped, that the ends of those legs of said L-halves, which lie in the interior of the recess (259), are connected together, so that these L-legs represent together the stalk (251) of this protective piece (250), that the respective inner L-leg is equipped with a barb (265) sticking out from the outside of the same, that this barb (265) engages the deepening in the wall of the recess (259), that the other L-legs are outside the recess (259), that they rest on the front surface (5) of the end piece (1) and that they represent the beam (252) of this protective piece (250).

## Revendications

1. Mètre pliant comprenant au moins un élément de protection (30) attaché à au moins l'un des organes d'extrémité (1) du mètre pliant, en forme de T et dont la tige (50) est encastrée ou insérée dans l'organe d'extrémité (1) du mètre pliant, caractérisé en ce qu'un évidement (19) en forme de trou borgne est réalisé dans la partie d'extrémité libre de l'organe d'extrémité (1) depuis la face frontale (5) de cette partie d'extrémité, en ce que la largeur de la tige (50) de l'élément de protection (30) est plus petite que la largeur de l'organe d'extrémité (1) et en ce que des moyens (53) pour retenir l'élément de protection (30) dans l'organe d'extrémité (1) se trouvent à l'intérieur de l'organe d'extrémité (1).

2. Mètre pliant selon la revendication 1, caractérisé en ce que la tige (50; 60; 70; 91; 131) de l'élément de protection en forme de T (30, 35, 38, 39, 90, 130) est plate, en ce que la tige de l'élément de protection présente au moins un crochet de fixation (53, 54; 73, 74; 96; 104), en ce que la forme de la section transversale du trou borgne ou de l'évidement (19; 97) dans l'organe d'extrémité (1) correspond à la forme de la section transversale de la tige et en ce que le crochet de fixation peut venir en prise avec la paroi de l'évidement dans l'organe d'extrémité.

3. Mètre pliant selon la revendication 2, caractérisé en ce que la tige présente une section transversale de forme rectangulaire, en ce que le crochet de fixation est réalisé sur l'un des côtés d'une telle tige, en ce que le crochet de fixation (53; 54; 73; 74; 96; 104) peut présenter la forme d'une dent de scie et en ce que l'arête ou la crête ou la tête (78) du crochet de fixation s'étend perpendiculairement à l'axe longitudinal A de la tige.

4. Mètre pliant selon la revendication 3, caractérisé en ce qu'au moins l'un des côtés larges (102 ou 103) de la tige (70) présente le crochet de fixation (104), lequel s'étend sur une portion du côté large (102 ou 103); en ce que ce crochet (104) se trouve dans la zone centrale du côté large (102; 103) et en ce que la paroi de l'évidement (19) se trouvant en face de ce crochet présente dans l'organe d'extrémité (1) un renfoncement (113) pour recevoir le crochet (104).

5. Mètre pliant selon la revendication 1, caractérisé en ce que la poutre (136) de l'élément de protection (135) est de forme parallélépipédique, en ce que la dimension de la base de cette poutre (136) correspond à la dimension de la face frontale (5) de l'organe d'extrémité (1) et en ce que qu'une projection (140) est réalisée sur au moins l'une des parois latérales (137) de la poutre (136), laquelle fait saillie depuis cette paroi latérale (137).

6. Mètre pliant selon la revendication 1, caractérisé en ce qu'un renfoncement (205) est réalisé dans la face principale ou large respective (203) de la tige (201), en ce qu'une accumulation (210) du matériau de l'organe d'extrémité (1) s'élève du côté interne de l'évidement (209) dans l'organe d'extrémité (1) et en ce que cette accumulation (210) se situe dans le renfoncement (205).

7. Mètre pliant selon la revendication 6, caractérisé en ce que les renfoncements (205) présentent un fond commun (206) et s'ouvrent dans des directions opposées les unes aux autres, en ce que ces renfoncements (205) présentent avantageusement une projection horizontale essentiellement carrée, en ce que le côté étroit (202) de la tige (201) de l'élément de protection présente une première portion (211) se raccordant à une extrémité à la poutre (31) de l'élément de protection en forme de T (200), en ce qu'à l'autre extrémité de cette première portion de paroi (211) se raccorde à une extrémité une deuxième portion (212) du côté étroit (202) de la tige (201), qui s'étend obliquement et qui est orientée vers l'axe médian A, en ce que le côté étroit (202) présente une troisième portion de paroi (213), qui se raccorde à une extrémité à l'extrémité mentionnée en dernier de la deuxième portion de paroi (212), laquelle s'étend parallèlement à l'axe longitudinal A de la tige (201) et dont l'autre extrémité se trouve dans la zone de la partie extrême (37) de la tige (201), en ce que la paroi étroite respective (215) de l'évidement (209) présente une première portion, qui correspond à la première portion (211) sur la tige (201), en ce que la paroi étroite (215) présente en outre une deuxième portion (216), qui correspond à la deuxième portion de paroi étroite (212) sur la tige (201), en ce que la paroi étroite (215) présente une troisième portion, qui correspond à la troisième portion (213) de la paroi étroite (202) de la tige et qui sert de surface de guidage pour cette partie de la tige (201), en ce que l'évidement (209) est réalisé avec une profondeur telle que son fond (217) se trouve à une certaine distance de la partie frontale (37) de la tige (201), en ce que cette partie d'extrémité (37) de la tige (201) présente un évidement (204) dans la partie d'extrémité libre (37) de la tige (201).

8. Mètre pliant selon la revendication 1, caractérisé en ce que la paroi intérieure d'au moins l'un des côtés larges (226) de l'évidement (229) est pourvue d'une dent d'accrochage (228), en ce que cette dent (228) fait saillie depuis la paroi intérieure et vient en prise avec l'une des parois d'un renfoncement (225) dans la tige (221) de l'élément de protection (220), et en ce que ce renfoncement (225) peut être réalisé sous forme d'ouverture traversante.

9. Mètre pliant selon la revendication 1, caractérisé en ce que l'élément de protection en forme de T (270) présente une portion de matériau (272) plate ou en forme de plaque, en ce que la projection horizontale de cette portion de plaque (272) a la même forme que la face frontale (5) de l'organe d'extrémité (1), en ce que ce morceau de matériau (272) est associé à la face frontale (5) de l'organe d'extrémité (1), de sorte que la portion de matériau (272) en forme de plaque constitue la poutre de l'élément de protection en forme de T (270), en ce que dans la zone centrale de cette portion de plaque (272) une bande (271) est cintrée hors du plan de ce morceau de matériau (272), de sorte qu'une structure en forme d'arceau (271) en résulte, en ce que cette bande arquée (271) se trouve à l'intérieur de l'évidement (279) dans l'organe d'extrémité (1) et constitue la tige de l'élément de protection (270), en ce qu'une dent d'accrochage (280) est disposée à l'intérieur de l'évidement (279), laquelle se trouve dans la zone de l'ouverture de l'évidement (279) et fait saillie depuis l'une des parois internes de cet évidement, et en ce que la tige en forme d'arceau (271) est en prise avec cette dent (280).

10. Mètre pliant selon la revendication 1, caractérisé en ce que dans au moins l'une des parois internes larges de l'évidement (259) est réalisé un renfoncement (265), en ce que l'élément de protection (250) se compose de deux moitiés de même forme (253, 254), en ce que chacune de ces moitiés (253, 254) est essentiellement en forme de L, en ce que les extrémités des branches de ces moitiés en L (253, 254) se trouvant à l'intérieur de l'évidement (259) sont reliées entre elles, de sorte que ces branches en L constituent ensemble la tige (251) de cet élément de protection (250), en ce- que chaque branche en L interne est pourvue d'une dent d'accrochage (265) faisant saillie depuis son côté externe, en ce que cette dent (265) est en prise avec le renfoncement dans la paroi de l'évidement (259) et en ce que les autres branches en L se trouvent à l'extérieur de l'évidement (259), s'appuient sur la face frontale (5) de l'organe d'extrémité (1) et forment la poutre (252) de cet élément de protection (250).
